# EUROPEAN PATENT SPECIFICATION

(11) **EP 1 113 036 B1**
(45) Date of publication and mention of the grant of the patent: **21.12.2005**
(21) Application number: 00311247.1
(22) Date of filing: 15.12.2000
(51) Int. Cl.: C08G 77/06, C08G 77/02

(54) **Continuous process for producing a silicon resin**
Kontinuierliches Verfahren zur Herstellung von Siliconharzen
Procédé continu pour la préparation de résines de polysiloxane

(30) Priority: 28.12.1999 US 473734
(43) Date of publication of application: 04.07.2001
(73) Proprietor: GENERAL ELECTRIC COMPANY, Schenectady, NY 12345 (US)
(72) Inventor: Wengrovius, Jeffrey H., Scotia, New York 12302 (US); Green, Richard Walter, Elkton, Maryland 21921 (US); Capuano, Carl F., Mechanicville, New york 12118 (US)
(74) Representative: Szary, Anne Catherine

(56) References cited:
- EP-A- 0 718 344
- US-A- 2 676 182
- US-A- 3 790 510
- US-A- 4 935 484
- US-A- 5 319 040

## Description

This invention relates to a continuous process of making silicon resins, more particularly, to a continuous process for making MQ silicon resins.

Silicon resins containing triorganosiloxy structural units, generally referred to as "M" units, and tetrasiloxy structural units, generally referred to as "Q" units, are known as "MQ" resins.

MQ resins are used in a variety of applications, such as, for example, pressure-sensitive adhesives, liquid injection molding applications, paper release coatings and personal care products. MQ resins have been made by batch processes, such as, for example, those described in U.S. Patent 2,676,182 (Daudt *et al*.) and in U.S. Patent 5,391,673 (Ekeland *et al*.). Daudt *et al.* describe reacting an alkali metal silicate with an acid a to form a silica hydrosol and then reacting the hydrosol with a silane and/or siloxane to form an MQ resin. The process of Daudt *et al*. is suitable for making MQ resins having a low silanol content, but is unworkable for making MQ resins with a high silanol content. Ekeland *et al*. describe a multi-stage process for producing MQ resins wherein the Q component is derived from a halo silicate or an alkyl silicate. The Ekeland et al. process does not proceed through a hydrosol intermediate. Neither Daudt *et al*. nor Ekeland *et al*. discloses an MQ resin having a narrow, low molecular weight distribution.

There is a need in the art to efficiently and consistently produce MQ resin with minimal batch-to-batch variability. Furthermore, it would be very desirable have the flexibility to make MQ resins with either high silanol or low silanol content. There is also a need to provide a system of making MQ resins to accommodate the rapid kinetics of MQ resin formation to allow for the production of low molecular weight resins.

A first aspect of the present invention is directed to a process for making a silicon resin comprising continuously polymerizing sodium silicate in an aqueous medium and in the presence of acid to form a silica hydrosol and continuously quenching the silica hydrosol with alcohol.

In a preferred embodiment, the process of the present invention further comprises continuously capping the quenched silica hydrosol in a reaction medium comprising water and a liquid selected from organic solvents, siloxane fluids and mixtures thereof with an organosilicon capping compound to form the silicon resin.

The process of the present invention allows consistent, reproducible production of silicon resins having narrow molecular weight distributions and high silanol content.

Another aspect of the present invention is directed to a silicon resin comprising triorganosiloxy structural units and tetrasiloxy structural units, wherein a solution of 60 percent by weight of the silicon resin in toluene exhibits a viscosity of less than about 6 centiStokes ("cSt") at 25°C.

In a preferred embodiment, the silicon resin of the present invention is one according to the structural formula (I):

[MₐD_{b}T_{c}Q_{d}Q'ₑ]ₓ (I)

wherein:
M is R¹₃SiO_{1/2},
D is R²₂SiO_{2/2}
T is R³SiO_{3/2}
Q is SiO_{4/2},
Q' is SiR⁴O_{3/2}.
each R¹, R² and R³ is independently H or a monovalent hydrocarbon radical, provided that R³ is not alkoxy,
R⁴ is hydroxy, alkoxy or halo,
a, b, c and d are each numbers, wherein 0.5 ≤ a ≤ 1.0, 0 ≤ b ≤ 0.25,
0 ≤ c ≤ 0.25, 0 ≤ d ≤ 1, 0 ≤ e ≤ 1, provided that 0< (d+e) and x is selected so that a solution of 60 percent by weight the resin solids in toluene exhibits a viscosity of less than about 6 cSt at 25°C.

### DETAILED DESCRIPTION OF THE PREFERRED EMBODIMENTS

As used herein, the terminology "continuous process" refers to a method in which reactants are continuously supplied to a reactor and products are continuously removed from the reactor. As used herein, the terminology "high silanol content" refers to an amount of silanol groups, i.e., silicon bonded -OH groups, in the MQ resin above about 1 percent by weight ("wt%"). As used herein, the notation "≤" means less than or equal to and the notation "<" means less than.

In the process of the present invention, metered streams of sodium silicate and a dilute acid are continuously supplied to a reactor. The reactor may be any type of reactor consisting of a series of mixing stages, such as, for example, a plug flow static mixer reactor, a packed plug flow reactor, a Sheibel type plug flow column or a mix loop reactor. Sheibel type plug flow columns are preferred.

Generally, sodium silicate is introduced to the reactor as aqueous solution having a SiO₂ content of about 5 wt% to about 70 wt%. In a preferred embodiment, sodium silicate in is introduced to the reactor as an aqueous solution in which the SiO₂ content is from about 5 wt% about 20 wt%, more preferably, from about 5 wt% to about 15 wt%, even more preferably, from about 5 wt% to about 12 wt%. Typically the sodium silicate exhibits a molar ratio of SiO₂:Na₂O of at least about 2.0, more preferably at least about 2.5, most preferably at least about 3.0.

The acid is added to induce polymerization of sodium silicate to thereby form a silica hydrosol. In a preferred embodiment, the acid is added to the reaction mixture in an amount effective to reduce the pH of the mixture to less than 7, more preferably between about -1 and 6, even more preferably between about 1 and 4 and most preferably between about 1 and 2.

Acids suitable for use as the acid component of the present invention include both inorganic acids, such as for example, hydrochloric acid, nitric acid, hydrobromic acid, hydrogen iodide, sulfuric acid, phosphoric acid, sulfonic acid, and carbonic acid and organic acids, such as, for example, acetic acid, propionic acid, formic acid, benzoic acid, salicylic acid, sebacic acid, adipic acid, dicarboxylic acids, oleic acid, palmitic acid, stearic acid, and phenylsteric acid, as well as mixtures of any of the above.

In a preferred embodiment, the acid comprises one or more of hydrochloric acid, sulfuric acid, nitric acid, phosphoric acid, sulfonic acid, hydrobromic acid and hydrogen iodide. Most preferably, the acid comprises hydrochloric acid.

In a preferred embodiment, the acid is introduced to the reactor as an aqueous solution having an acid concentration of from about 5 wt% to about 99 wt%, more preferably, from about 5 wt% to about 35 wt%, and even more preferably from about 15 wt% to about 25 wt%.

The streams of silica and acid reactants are supplied to the reactor at rates selected for each respective product to control the stoichiometry and reactor residence time. In a preferred embodiment, the polymerization reaction mixture generally comprises from 50 wt% to 95 wt%, more preferably from 75 wt% to 95 wt% water, from 1 to 25 wt%, more preferably from 5 to 15 wt%, sodium silicate and from 0.5 to 10 wt%, more preferably from 2 wt% to 8 wt%, acid.

After a residence time sufficient to allow the desired amount of polymerization of the silicate/acid reaction mixture to occur, a quencher is added to the reaction mixture to substantially inhibit further polymerization of the silica hydrosol and thereby control the molecular weight of the products formed. Suitable quenchers are polar, water soluble organic compounds having heteroatoms capable of hydrogen bonding to the hydroxyl groups of the hydrosol to thereby inhibit further polymerization of the hydrosol, such as for example, organic alcohols, such as methanol, ethanol, n-propanol, isopropanol, n-butanol, isobutanol, and glycols, such as , for example, ethylene glycol and propylene glycol, ketones, such as for example, acetone and methyl ethyl ketone, as well as mixtures of all of the above. Preferably, the quencher is a water-soluble organic alcohol or glycol or mixture thereof. In highly preferred embodiment, the quencher comprises one or more (C₁-C₁₂)alcohols. More preferably, the quencher comprises one or more of isopropanol, methanol and ethanol.

The quencher is supplied in varying amounts relative to the sodium silicate present in the reaction mixture for each respective product to be produced in order to control the stoichiometry of the reaction and the properties of the product produced. Generally, the quencher is introduced to the reactor as a stream of 100 wt% quencher or as a stream of an aqueous solution containing from about 50 wt% to about 99 wt% quencher. In a preferred embodiment, an amount of quencher equal to the product of a factor of from 0.5 to 10 times the amount of sodium silicate present in the reaction mixture is added to the reaction mixture to substantially inhibit further polymerization of the silica hydrosol and thereby control the molecular weight of the products formed.

In a preferred embodiment, the polymerization and quenching reactions are each carried out at a temperature from about 0°C to about 75°C, more preferably from about 0°C to about 40°C and most preferably from about 5°C to about 25°C.

For a given reaction mixture, the molecular weight of the hydrosol depends upon reaction temperature and residence time of the silica/acid reaction mixture prior to the addition of quencher. In a preferred embodiment, the quencher is added to the silica/acid reaction mixture after a residence time of from less than 1 minute, that is, substantially instantaneously, after mixing of the silica and acid reactant streams, to about 30 minutes after mixing of the silica and acid reactant streams. In a preferred embodiment, wherein a low molecular weight product is desired, the quencher is added to the reaction mixture after a residence time of from less than 1 minute after mixing of the silica and acid reactant streams to about 10 minutes after mixing of the silica and acid reactant streams, more preferably after a residence time of from less than 1 minute after mixing of the silica and acid reactant streams to about 5 minutes after mixing of the silica and acid reactant streams.

Typically, the quenched hydrosol is subsequently "capped" by reaction with an organosilicon compound to form an organosilicone resin. Preferred organosilicon capping compounds include halo, hydroxyl, alkoxyl or triorganosiloxy functional silicon compounds.

In a highly preferred embodiment, the organosilicon capping compound comprises a compound according to the structural formula (II):

R⁵₍₄₋ₙ₎SiYₙ (I)

wherein:
Y is halo, hydroxyl, - OR⁶ or - OSiR⁷₃;
R⁵, R⁶ and R⁷ are each independently H or a monovalent hydrocarbon radicals, and
n is 1, 2 or 3.

As used herein, the term "monovalent hydrocarbon radicals" includes monovalent acyclic hydrocarbon radicals, monovalent alicyclic hydrocarbon radicals and monovalent aromatic hydrocarbon radicals.

As used herein, the terminology "acyclic hydrocarbon radical" means a straight chain or branched hydrocarbon radical, preferably containing from 1 to 20 carbon atoms per radical, which may be saturated or unsaturated and which may be optionally substituted or interrupted with one or more functional groups, such as, carboxyl, cyano, hydroxy, halo, mercapto, oxy. Suitable monovalent acyclic hydrocarbon radicals include, for example, alkyl, alkenyl, alkynyl, hydroxyalkyl, cyanoalkyl, carboxyalkyl, haloalkyl, such as, for example, methyl, ethyl, ethenyl, sec-butyl, tert-butyl, octyl, decyl, dodecyl, cetyl, stearyl, ethenyl, propenyl, butynyl, hydroxypropyl, cyanoethyl, carboxymethyl, chloromethyl and 3,3,3-fluoropropyl.

As used herein, the terminology "alicyclic hydrocarbon radical" means a radical containing one or more saturated hydrocarbon rings, preferably containing from 4 to 10 carbon atoms per ring, per radical which may optionally be substituted on one or more of the rings with one or more alkyl or alkylene groups, each preferably containing from 1 to 6 carbon atoms per group, or other functional groups and which, in the case of two or more rings, may be fused rings. Suitable monovalent alicyclic hydrocarbon radicals include, for example, cyclohexyl and cyclooctyl.

As used herein, the terminology "aromatic hydrocarbon radical" means a hydrocarbon radical containing one or more aromatic rings per radical, which may optionally be substituted on one or more of the aromatic rings with one or more alkyl groups, each preferably containing from 1 to 6 carbon atoms per group, halo or other functional groups. In a preferred embodiment, the aromatic hydrocarbon radical is a monocyclic aromatic hydrocarbon radical, i.e., a aromatic hydrocarbon radical containing one aromatic ring per radical. Suitable monovalent aromatic hydrocarbon radicals include, for example, phenyl, tolyl, chlorophenyl, 2,4,6-trimethylphenyl and I, 2-isopropylmethylphenyl.

In a preferred embodiment, R⁵, R⁶ and R⁷ are each independently (C₁-C₈)alkyl, (C₄-C₈)cycloalkyl, (C₂-C₈)alkenyl, halo(C₁-C₈)alkyl or monocyclic aromatic hydrocarbon radical, which may optionally be substituted on the aromatic ring with one or more (C₁-C₆)alkyl or halo groups.

In a highly preferred embodiment, Y is halo, more preferably chloro, (C₁-C₈)alkoxy, preferably methoxy, ethoxy or propoxy, or tri(C₁-C₈)alkylsiloxy, preferably trimethlsiloxy.

In a highly preferred embodiment, each R⁵ is independently (C₁-C₈)alkyl, preferably methyl or (C₂-C₈)alkenyl, preferably vinyl, or halo(C₁-C₈)alkyl, preferably fluoro(C₁-C₈)alkyl.

Examples of the compounds suitable for use as the organosilicon capping compound of the present invention include, for example, trimethylchlorosilane, trimethylethoxysilane, trimethylisopropoxysilane, phenyldimethylchlorosilane, hexamethyldisiloxane, dimethylchlorosiloxane, phenyltrichlorosilane, diethyltetramethyldisiloxane, tolylmethyldichlorosilane, stearyltrichlorosilane, chlorophenyldimethylchlorosilane, monotolylsiloxane, trifluorotolylmethyldichlorosilane, triethylchlorosilane, ethyldimethylchlorosilane, tetramethyldisiloxane, methyldivinylchlorosilane, and mixtures thereof. In a preferred embodiment, the organosilicone capping compound comprises one or more of trimethylchlorosilane, dimethylchlorosilane, dimethylvinylchlorosilane and methylvinyldichlorosilane.

The amount of capping compound suitable for use in the present invention varies with the degree of capping desired and the amount of polymer formed in the previous stages of the reaction. Generally, the capping compound is used in a amount of about 0.1 mole to about 3.0 moles, more preferably, about 0.5 mole to about 1.0 mole, even more preferably, about 0.6 mole to about 1.0 mole, of the capping compound per mole SiO₂ units contained in the quenched hydrosol.

Suitable organic or siloxane fluids for use in the capping step of the process of the present invention include those fluids in which the desired MQ resin product is soluble and in which the water soluble quencher is relatively insoluble, such as , for example, hexamethyldisiloxane, toluene, xylene, linear and branched hydrocarbons, such as heptane, octane and isododecane, as well as mixtures thereof.

The amount of organic or siloxane fluid suitable for use in the capping stage of the process of the present invention may be about 5 to 75 wt%, more preferably, 20 to 40 wt%, most preferably about 30 wt% based on the total weight of the reactants. The fluid may be added to the reaction mixture at any stage of the process, preferably, after addition of the quencher.

In a preferred embodiment, the temperature of the capping reaction is from about 25°C to about 100°C, more preferably, from about 40°C to about 75°C, and most preferably from about 50°C to about 75°C. In a preferred embodiment, the residence time for the capping reaction is greater than or equal to about 5 minutes, more preferably, greater than or equal to about 30 minutes and most preferably, greater than or equal to about 45 minutes. In a preferred embodiment, the capping reaction is conducted at a pH of the less than 7, more typically, the pH is from about -1 to 6, more preferably, from about 0 to 4 and most preferably from about 0 to 2.

As the MQ resin is formed and capped, it transitions from the aqueous phase to the organic phase.

In a preferred embodiment, the process of present invention further comprises the step of allowing the reaction mixture to separate into an aqueous phase and an organic phase, with the organic phase comprising the silicon resin and the one or more of organic solvents and siloxane fluids.

The organic phase contains substantially all of the MQ resin, and therefore, separation may be accomplished by any method of separating aqueous and organic phases. In a preferred embodiment, separation is accomplished by decanting. Decanting allows a variable adiabatic residence time that permits slower reacting silanes to be incorporated into the product. The decanting phase may be performed in batch or, preferably, in a substantially continuous manner.

The residence time and temperature of the separation stage may be varied depending on the type of MQ resin to be produced. Separation can be performed by any known method, including both batch methods and continuous methods. Temperature is not a critical factor at this stage. Generally, the temperature of the separation stage is between about 40 to 100°C. Longer residence times allow slower reacting silanes to be incorporated, and therefore, residence time is based in part on the choice of silanes in the previous stage of the process. Generally, residence time is between about 15 to 60 minutes.

In a preferred embodiment, the process of present invention further comprises the step of stripping the organic phase to remove substantially all the water, acid and volatile organic solvents and isolate the MQ resin product. Stripping of volatiles is well known in the art, and may be accomplished by any method. Generally, the product is heated to a temperature of from about 100 °C to about 250°C. The MQ resin/organic solution may be allowed to reflux, and subsequently, the volatiles are removed by any known method, such as, for example, vacuum distillation or by employing a nitrogen purge. Stripping reduces the volatiles content of the final product and increases the percent yield of resin. The stripping process may be performed in batch, or preferably in a substantially continuous manner. Furthermore, the alcohol and other volatile materials, such as, for example, water, solvents, silanes, removed in the stripping process may be recovered and recycled to the reactor in which alcohol is added to substantially inhibit the polymerization process.

In a preferred embodiment, the process of present invention further comprises the step of filtering the isolated silicon resin. In most cases, the MQ resin is filtered by any known filtering method, and the solids content is adjusted to the desired specification. Generally, the solids content is adjusted to about 60% solids to assess the characteristics of the MQ resin, such as viscosity. The filtering stage may be performed batch-wise, or preferably, may be performed in a substantially continuous manner.

The MQ silicon resin product typically contains residual silanol groups. Typically, the MQ resin contains greater than about 1 wt% residual silanol groups, more typically, about 2 wt% residual silanol groups, wherein the percentages are based on the weight of the hydroxyl portion of such groups.

The process of present invention may, optionally, further comprise a step of reducing the amount of residual silanol groups contained in the MQ resin product. This may be accomplished by condensing the residual silanol groups of the MQ resin in the presence of an alkali catalyst or, alternatively, by reacting the residual silanol groups of the MQ resin with one or more of silazanes and halogenated silanes.

The step of reducing the amount of residual silanol groups can be conducted while simultaneously stripping the organic phase to isolate the silicon resin having a reduced amount of residual silanol groups. Alternatively, the step of reducing the amount of residual silanol groups can be conducted after stripping of the reaction mixture.

In a first embodiment, the silanol groups are condensed in the presence of an alkali catalyst and the alkali catalyst comprises one or more of NaOH, LiOH, and KOH. Intramolecular silanol condensation may reduce the silanol content to about 0.2 wt%. In a preferred embodiment, the -OH groups are condensed in the presence of a base to reduce the silanol content. The base catalyst may be an alkali base such as, for example, KOH, NaOH, LiOH. The preferred base is KOH. The condensation reaction may be performed by any conventional method, such as refluxing in xylene and removal of the water of condensation. Typically, the base catalyst is present at a concentration of about 200 parts per million (ppm).

In an alternative embodiment, the MQ resin is contacted with one or more silazanes, such as for example, hexamethyldisilazane, or halogenated silanes, such as for example, trimethylchlorosilane, to reduce the silanol content of the MQ resin.

The reduced silanol content embodiments of the MQ resin typically exhibit a silanol content of less than 1 wt%.

In another embodiment of the invention, products may be discharged to other stages of the process, or to several locations along the process as desired. For products requiring less residence time in the first stage, for example, at least some of the product from the first stage may be pumped to other locations along the process as a way of varying residence time. The process encompasses flexibility in flow rates, reactor volumes, temperature and residence time in order to achieve MQ resins with desired functional groups in narrow molecular weight ranges and viscosities.

In a preferred embodiment, the alcohol and organic or siloxane solvent are recycled. The alcohol, such as isopropanol, for example, may be recovered from the stripping stage and recycled back to the quenching stage. Similarly, the alcohol may be recovered from the separation process and recycled back to the quenching stage. With recycling, the composition of the alcohol solution reaches a steady state mixture which contributes to the consistency of the process, and to the predictability of the products achieved by the process. Moreover, recycling of the alcohol reduces the cost of the process. Similarly, the organic solvents may be recycled in the process of the invention.

In a preferred embodiment, the MQ resin made by the process of the present invention has a silanol content of greater than or equal to 1 wt%, more preferably, greater than or equal to 2 wt%, based on the total weight of MQ resin solids.

In an alternative preferred embodiment, a reduced silanol content MQ resin made by the process of the present invention has a silanol content of less than 1 wt%.

In a preferred embodiment of the silicon resin according to structural formula (I), R¹, R² and R³ are each alkyl, more preferably (C₁-C₈)alkyl, even more preferably methyl.

In a preferred embodiment of the silicon resin according to structural formula (I), R⁴ is hydroxy.

In a preferred embodiment of the silicon resin according to structural formula (I), 0.6 ≤ a ≤ 1.0, 0 ≤ b ≤ 0.25, 0 ≤ c ≤ 0.25, 0.5 ≤ d ≤ 1.0 and 0 ≤ e ≤ 0.5, more preferably 0.6 ≤ a ≤ 1.0, 0 ≤ b ≤ 0.25, 0 ≤ c ≤ 0.25, 0.7 ≤ d ≤ 1.0 and 0 ≤ e ≤ 0.3.

### EXAMPLES

The following examples were prepared in a pilot continuous MQ resin reactor which included the following units:
(a) a continuously stirred column reactor (Sheibel-type) having three stages:
   Stage 1: a hydrosol reactor for acidification of sodium silicate,
   Stage 2: alcohol reactor for quenching the hydrosol, and
   Stage 3: a chlorosilane reactor equipped with steam injection for heating,
(b) a continuous separator;
(c) a batch stripping column; and
(d) a filtration unit.

The column reactor contained control-flow plates between the stages to prevent back mixing. In addition, the reactor system was further equipped with tanks for the inputs, cooling units for the inputs, pumps and weighing systems to precisely control resin composition, and storage tanks for finished resin and recycling streams. It is to be understood that the stripping and filtration may also be performed on a continuous basis in the process of the invention.

The completion of the capping reaction is an important variable of the present process, with a greater percent completion of the capping reaction reflected in a reduction in the solution viscosity of the MQ resin product. The percent completion of the capping reaction was characterized in the following Examples by calculating the product of a factor of 100 times the quotient of the viscosity of the MQ resin product divided by the viscosity of resin intermediate present in the Stage 3 reaction mixture, where viscosities were measured at 25°C in centiStokes for resin samples adjusted to 60.0% solids in toluene.

### EXAMPLE 1

An MQ resin having an M/Q molar ratio of 0.8 was prepared in the continuously stirred column reactor described in the following manner, under steady state conditions, for 3 hours:
(1) A hydrosol was prepared in Stage 1 of the reactor by acidifying a 41/59 mixture of sodium silicate and water, where the sodium silicate had an SiO₂ content of 29 wt% and a ratio of SiO2/Na2O of 3.22, with a 16.5 % solution of HCI in water. A stream of sodium silicate and water solution was introduced to Stage 1 of the reactor at a rate of 157 grams per minute ("g/min") and a stream of HCI solution was introduced to Stage 1 of the reactor at a rate of 57 g/min. Both the sodium silicate and HCI solutions were cooled to 7°C prior to the reaction. The reactant streams were thoroughly mixed in Stage 1 of the reactor under turbulent conditions. The residence time of the reaction mixture in Stage 1 of the reactor was from about 1 minute to about 5 minutes.
(2) A stream of isopropanol was added in Stage 2 of the continuously stirred column reactor at a rate of 61.5 g/min to quench the hydrosol formed in Stage 1 of the reactor. The residence time of the reaction mixture in Stage 2 of the reactor was about 2.9 minutes.
(3) A stream of trimethylchlorosilane was added in Stage 3 of the continuously stirred column reactor at a rate of 27.1 g/min to cap the quenched hydrosol formed in Stage 2 of the reactor. At the same time, a stream of toluene solvent was added at a rate of 22.2 g/min. The reaction mixture was heated to 65°C in Stage 3 by steam injection. The residence time of the reaction mixture in Stage 3 of the reactor was about 13.4 minutes.
(4) The reaction mixture from Stage 3 of the reactor was separated in a continuous separation unit into an organic phase, which contained the MQ resin product, and aqueous waste phase.
(5) The organic phase was stripped of residual volatile species such as water, hexamethyldisiloxane, and isopropyl alcohol.
(6) The stripped organic phase was then filtered and the MQ solids content adjusted to 60 wt% solids with additional toluene.

The final MQ resin toluene solution had a viscosity of 9.8 cSt at 60 wt% solids. The amount of silanol groups on the resin was measured at 2.7 wt%. A sample of resin toluene solution taken after Stage 3 of the continuously stirred column reactor was adjusted to 60 wt% solids and found to have a viscosity of 24.7 cSt. The percent completion of the capping reaction after Stage 3 was 39.8 wt% (calculated as 9.8/24.7 x 100).

### EXAMPLE 2

A series of three MQ resins were prepared in the manner identical to the resin in Example 1, except that the residence times in Stage 3 of the reactor were 13.4 min., 17.5 min., and 20.3 min, respectively. The results obtained are set forth below in TABLE I, expressed as residence time in stage 3 ("t₃") in minutes, viscosity of resin intermediate at stage 3 "("η₃") in centiStokes, viscosity of resin product ("η_{f}") in centiStokes, percent completion of the capping reaction at Stage 3 of the process ("Completion") and the amount, in wt%, of silicon-bonded hydroxyl groups [-OH]"

**TABLE I**

| Ex # | t₃ (minutes) | η₃(cSt) | η_{f}(cSt) | η_{f}(cSt) | [-OH] (wt%) |
|---|---|---|---|---|---|
| 2A | 13.4 | 14.5 | 8.6 | 59.4 | 2.4 |
| 2B | 17.5 | 12.6 | 8.2 | 65.3 | 2.3 |
| 2C | 20.3 | 10.6 | 7.9 | 74.7 | 2.3 |

### EXAMPLE 3

An MQ resin was prepared in a manner described in Example 1, except the hydrosol was formed by mixing the silicate and the acid solutions in a ¼ inch tube equipped with static mixing elements located immediately before the continuously stirred column reactor. The isopropyl alcohol was also added downstream of the hydrosol in this plugged flow tube with static mixing. The solvent and trimethylchlorosilane were added to the beginning of the continuously stirred column reactor. As a result, the residence time of the hydrosol and quenching Stages were significantly reduced to 1.5 min. and 0.16 min., respectively. The results obtained are set forth below in TABLE II.

**TABLE II**

| Example # | t₃ (minutes) | η₃(cSt) | η_{f}(cSt) | Completion (%) |
|---|---|---|---|---|
| 3 | 18.7 | 4.6 | 4.1 | 89 |

### EXAMPLE 4

Following the process of Example 1, sodium silicate solution was injected through an eductor into a fast moving stream of an HCI solution in Stage 1. This process was performed in a loop. In Stage 2, the isopropanol was added to the hydrosol in a ¼ inch tube with static mixing elements which connected the Stage 1 loop to the beginning of the continuously stirred reactor. Utilizing this process change, a series of 4 MQ resins were prepared. In this Example, the starting temperature of the sodium silicate and HCI solutions was 20°C. The residence times in the Stage 1 hydrosol reactor and Stage 2 isopropyl alcohol reactor were 2.4 and 0.26 min. respectively. The residence time in the Stage 3 silane reactor was varied between 2 and 60 minutes. The results obtained are set forth below in TABLE III.

**TABLE III**

| Ex # | t₃ (minutes) | η₃ (cSt) | η_{f} (cSt) | Completion (%) |
|---|---|---|---|---|
| 4A | 2 | 12.9 | 7.5 | 58.0 |
| 4B | 30 | 7.3 | 6.1 | 83.4 |
| 4C | 45 | 7.2 | 6.3 | 87.6 |
| 4D | 60 | 7.1 | 6.5 | 91.5 |

This Example offers another variation to the Stage 1 hydrosol reactor in the continuous process to manufacture MQ resins, and again demonstrates the need for long residence times in the silane reactor to achieve high levels of completion. The Example further demonstrates that the hydrosol reactor in Stage 1 can deviate from plug flow conditions and be run as a continuously stirred reactor.

### EXAMPLE 5

An MQ resin was prepared as described in Example 4, except that the starting temperature of the sodium silicate and HCl solutions was 30°C. The following results were obtained:

**TABLE IV**

| Ex # | t₃ (cSt) (minutes) | η₃ (cSt) | η_{f} (cSt) | Completion (%) |
|---|---|---|---|---|
| 5 | 60 | 12.4 | 10.9 | 87.9 |

The short residence times, enabled by the turbulent plug flow conditions of the continuous process of the present invention permit synthesis of low viscosity, low molecular weight resins. Such resins cannot be made in batch processes because batch processes inherently require longer residence times. The synthesis of low viscosity, low molecular weight MQ resins is shown above in Example 3. The continuous process of the invention also produces MQ resins with a high silanol content, as shown above in Example 1. The foregoing Examples are provided for the purpose of illustrating the process of the present invention. The Examples are not to be construed as limiting the scope of the invention, which is defined in the appended claims.

## Claims

1. A process for making a silicon resin, comprising continuously polymerizing sodium silicate in an aqueous medium and in the presence of acid to form a silica hydrosol and continuously quenching the silica hydrosol with alcohol.

2. The process of claim 1, further comprising continuously capping the quenched silica hydrosol with an organosilicon capping compound in a reaction medium comprising water and a liquid selected from organic solvents, siloxane fluids and mixtures thereof to form the silicon resin.

3. The process of claim 1, further comprising allowing the reaction mixture to separate into an aqueous phase and an organic phase, said organic phase comprising the silicon resin and the one or more of organic solvents and siloxane fluids.

4. The process of claim 3, further comprising stripping the organic phase to isolate the silicon resin.

5. The process of any preceding claim, further comprising filtering the isolated silicon resin.

6. The process of claim 3, wherein the silicon resin contains residual silanol groups, further comprising reducing the amount of residual silanol groups while simultaneously stripping the organic phase to isolate the silicon resin having a reduced amount of residual silanol groups.

7. The process of claim 6, wherein the amount of residual silanol groups is reduced by condensing the silanol groups in the presence of an alkali catalyst or by reacting the silanol groups with one or more of silazanes and halogenated silanes.

8. The process of claim 2, wherein the organic solvents and siloxane fluids comprises one or more of hexamethyldisiloxane, toluene, xylene, linear hydrocarbons and branched hydrocarbons.

## Patentansprüche

1. Verfahren zur Herstellung eines Siliziumharzes, bei welchem man Natriumsilikat kontinuierlich in einem wässrigen Medium und in Gegenwart einer Säure zur Bildung eines Kieselsäurehydrosols polymerisiert und das Kieselsäurehydrosol kontinuierlich mit Alkohol abbricht (quencht).

2. Verfahren nach Anspruch 1, weiterhin aufweisend, dass man das abgebrochene (gequenchte) Kieselsäurehydrosol kontinuierlich mit einer Organosiliziumdeckelungsverbindung in einem Reaktionsmedium deckelt (cappt), welches Wasser und eine Flüssigkeit aufweist ausgewählt aus organischen Lösungsmitteln, Siloxanfluiden und Mischungen daraus zur Bildung des Siliziumharzes (silicon resin).

3. Verfahren nach Anspruch 1, weiterhin aufweisend, dass man die Reaktionsmischung sich in eine wässrige Phase und eine organische Phase trennen lässt, wobei die organische Phase das Siliziumharz aufweist und das eine oder mehrere organische Lösungsmittel und Siloxanfluide.

4. Verfahren nach Anspruch 3, weiterhin aufweisend, dass man die organische Phase zur Isolierung des Siliziumharzes strippt.

5. Verfahren nach einem der vorhergehenden Ansprüche, weiterhin aufweisend, dass man das isolierte Siliziumharz filtert.

6. Verfahren nach Anspruch 3, wobei das Siliziumharz restliche Silanolgruppen enthält, weiterhin aufweisend, dass man den Gehalt an restlichen Silanolgruppen verringert, während zugleich die organische Phase zur Isolierung des Siliziumharzes gestrippt wird, welches einen verringerten Gehalt an restlichen Silanolgruppen hat.

7. Verfahren nach Anspruch 6, **dadurch gekennzeichnet, dass** der Gehalt an restlichen Silanolgruppen **dadurch** verringert wird, dass man die Silanolgruppen in Gegenwart eines Alkalikatalysators kondensiert oder dass man die Silanolgruppen mit einem oder mehreren Silazanen und/oder halogenierten Silanen umsetzt.

8. Verfahren nach Anspruch 2, **dadurch gekennzeichnet, dass** die organischen Lösungsmittel und Siloxanfluide Hexamethyldisiloxan, Toluol, Xylol, lineare Kohlenwasserstoffe und/oder verzweigte Kohlenwasserstoffe umfassen.

## Revendications

1. Procédé de fabrication d'une résine de silicone, qui comporte le fait de faire polymériser en continu du silicate de sodium, dans un milieu aqueux et en présence d'un acide, pour obtenir un hydrosol de silice, et le fait de bloquer en continu l'hydrosol de silice avec un alcool.

2. Procédé conforme à la revendication 1, qui comporte en outre le fait de coiffer l'hydrosol de silice bloqué avec un composé organo-silicié qui sert d'agent de coiffage, dans un milieu réactionnel comprenant de l'eau et un liquide choisi parmi les solvants organiques, les siloxanes liquides et leurs mélanges, pour obtenir la résine de silicone.

3. Procédé conforme à la revendication 1, qui comporte en outre le fait de laisser le mélange réactionnel se séparer en une phase aqueuse et une phase organique, laquelle phase organique comprend la résine de silicone et le ou les solvant(s) organique(s) et/ou siloxane(s) liquide(s).

4. Procédé conforme à la revendication 3, qui comporte en outre le fait de soumettre la phase organique à un strippage pour isoler la résine de silicone.

5. Procédé conforme à l'une des revendications précédentes, qui comporte en outre le fait de récupérer par filtration la résine de silicone isolée.

6. Procédé conforme à la revendication 3, dans lequel la résine de silicone contient des groupes silanol résiduels et qui comporte en outre le fait de réduire la quantité de groupes silanol résiduels tout en soumettant simultanément la phase organique à un strippage, pour isoler une résine de silicone à teneur réduite en groupes silanol résiduels.

7. Procédé conforme à la revendication 6, dans lequel on réduit la quantité de groupes silanol résiduels en faisant se condenser les groupes silanol en présence d'un catalyseur alcalin, ou en faisant réagir les groupes silanol avec un ou plusieurs silane(s) halogéné(s) et/ou silazane(s).

8. Procédé conforme à la revendication 2, dans lequel le ou les solvant(s) organique(s) et/ou siloxane(s) liquide(s) comporte(nt) un ou plusieurs des hexaméthyl-disiloxane, toluène, xylène, hydrocarbures linéaires et hydrocarbures ramifiés.
